# EUROPEAN PATENT APPLICATION

(11) **EP 2 378 439 A1**
(43) Date of publication of application: **19.10.2011**
(21) Application number: 11158078.3
(22) Date of filing: 14.03.2011
(51) Int. Cl.: G06F 17/30

(54) **Grouping hyperlinks to a multilink**

(30) Priority: 14.04.2010 US 759892
(71) Applicant: Sony Ericsson Mobile Communications AB, 221 88 Lund (SE)
(72) Inventor: Chu, Jungle, Teipei City 105 (TW); Ho, M Michelle, Taipei 105 (TW)
(74) Representative: VALEA AB

(57) **Abstract**

A hyperlink and navigation apparatus for providing a fast and flexible form of user navigation is presented. The hyperlink may be configured to simultaneously open multiple destinations when activated. The multiple destinations may include any number of applications or webpages. The hyperlink may also be user configurable to define the destinations associated with the hyperlink.

## Description

### TECHNICAL FIELD

Example embodiments are directed towards user interface navigation through the use of hyperlinking, where a single hyperlink may be used to open a plurality of destinations.

### BACKGROUND

A hyperlink is a reference to a document that a user may directly follow upon activating the link. For example, a user may be reading a webpage with text including a list of the different states of the United States of America. Each state may be written as a hyperlink, such that the user may click the state name and thereafter be directed towards a webpage including information on the chosen state. Hyperlinks are designed to improve the navigation and search of a user.

### SUMMARY

Hyperlinks are designed to open a single webpage or reference per link. Therefore, in a text including a list of the different states of the United States of America, a hyperlink will be needed for each individual state. Thus, a user must constantly switch from screen to screen to get all of the desired information.

Example embodiments presented herein provide navigation methods which allow a user to open multiple webpages or applications through a single hyperlink. Example embodiments include a navigation apparatus which may comprise a user interface that may be configured to display a hyperlink. The apparatus may further include a processor that may be configured to launch a plurality of destinations once the hyperlink is activated. A destination may be an application and/or a webpage. The destinations may be opened, or example, in cascaded windows or tilted windows. The processor may be further configured to launch a submenu. The submenu may include a list of the plurality of destinations in a selectable form.

Example embodiments may also include a computer readable medium encoded with computer readable program code. The program code may include instructions operable to display a hyperlink in a user interface. The program code may also include instructions operable to launch a plurality of destinations when the hyperlink is activated.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is a schematic of a webpage featuring a hyperlink according to example embodiments;
FIG. 2 is a block diagram of a navigation apparatus according to example embodiments;
FIG. 3 is a flow diagram of example operational steps which may be performed by the navigation apparatus of FIG. 2 according to example embodiments;
FIG. 4 is a schematic of a webpage featuring an activated hyperlink and submenu according to example embodiments;
FIG. 5 is an illustrative example of an executed hyperlink launching multiple cascaded destinations according to example embodiments; and
FIG. 6 is an illustrative example of an executed hyperlink launching multiple tiled destinations according to example embodiments.

### DETAILED DESCRIPTION

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units", "apparatuses" or "devices" may be represented by the same item of hardware.

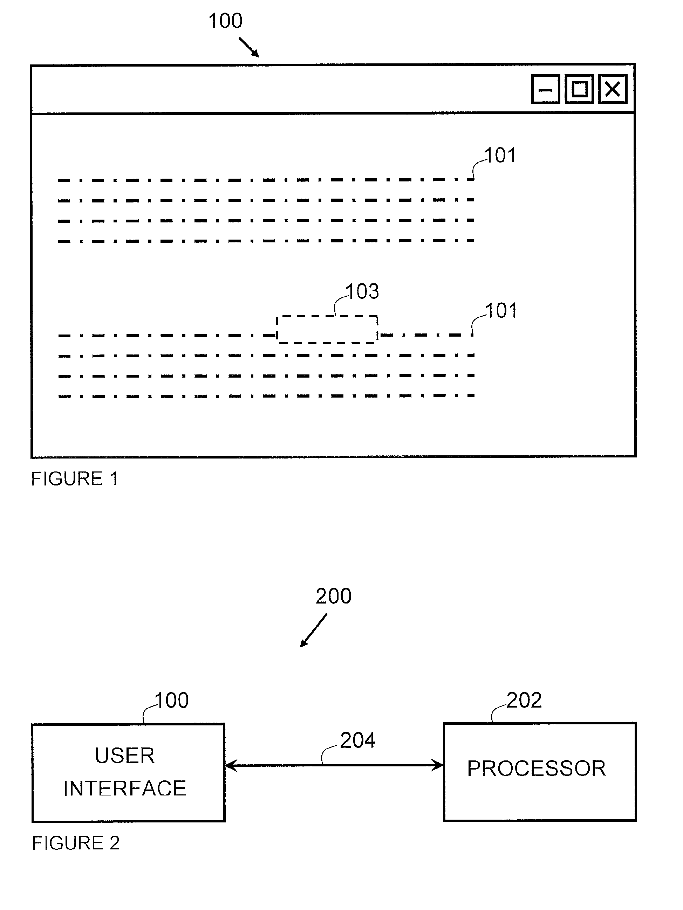

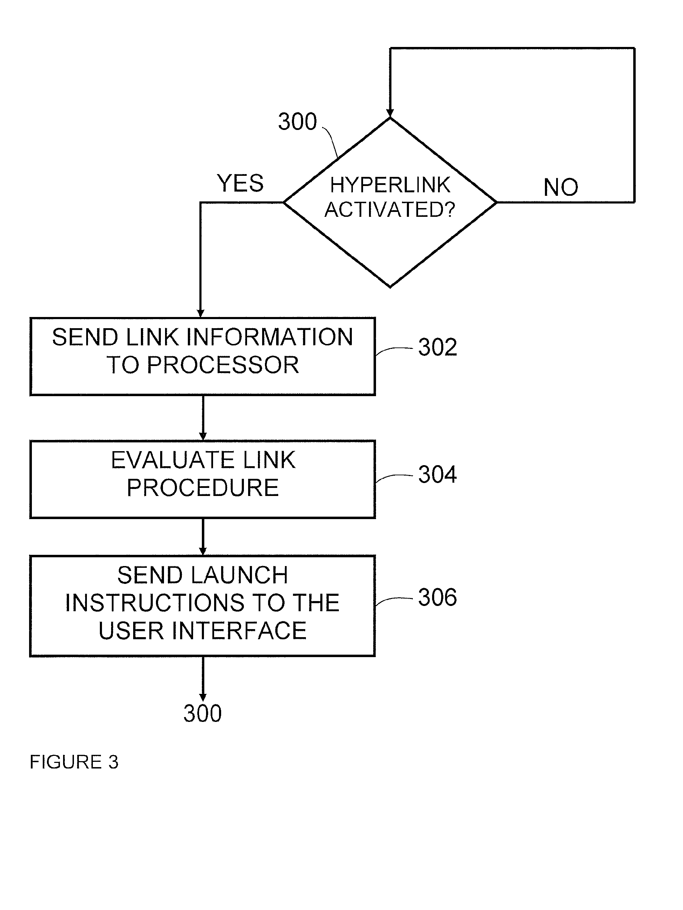

Figure 1 illustrates a user interface 100 which may be in the form of a webpage featuring text and/or images 101. The user interface 100 may also be a component of a navigation apparatus 200 illustrated in Figure 2. Figure 3 illustrates a flow chart of example operational steps which may be utilized by the navigation apparatus 200. The text within the webpage may include a hyperlink 103. The hyperlink 103 may be identified in the text 101 through the use of underlining or bolding, or any other means of hyperlink identification known in the art.

A processor 202 of the navigation apparatus 200 may be configured to continuously monitor the user interface 100 for the activation of any hyperlinks 103. In order to monitor the user interface 100 the processor 202 may be in connection with the user interface 100 via any connection means 204 known in the art. A hyperlink 103 may be activated, for example, by either placing a mouse icon over the hyperlink or clicking the hyperlink. It should be appreciated that hyperlink activation may also be performed by any other means known in the art.

Once the user interface 100 has determined that a hyperlink 103 has been activated, the user interface may send link information to the processor (300, 302). The link information may be used to identify which hyperlink was activated and which destinations or references are associated with the hyperlink. Upon receiving the link information, the processor 202 may evaluate a linking procedure associated with the activated hyperlink (304). Based on the linking procedure, the processor 202 may thereafter send launch instructions to the user interface 100 (306). The instructions may include, for example, which destinations or references to send to the user and in which format. Thereafter, the user interface 100 may continue to monitor the activation of hyperlinks (300).

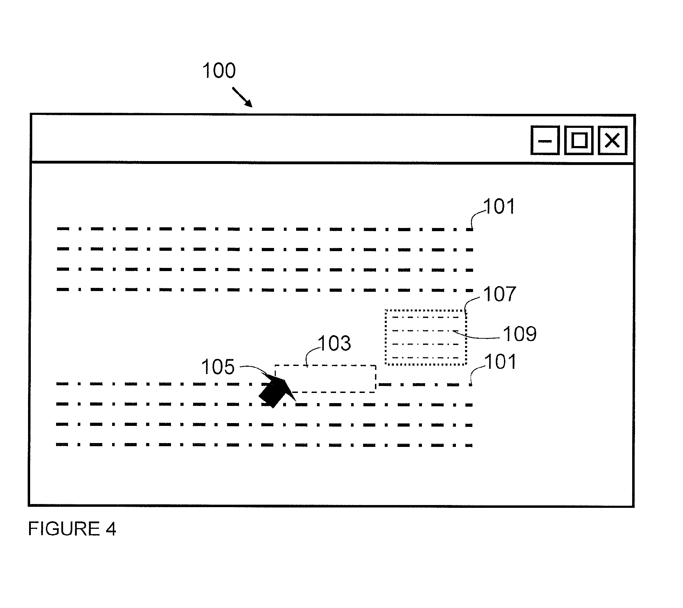

Figure 4 illustrates an example of a launched hyperlink 103 according to example embodiments. In the example the hyperlink 103 has been activated via a user placing a mouse icon 105 over the hyperlink. The navigation apparatus 200 in turn may send instructions to launch the hyperlink 103 resulting in a submenu 107 appearing in the vicinity of the hyperlink 103. In Figure 4 the submenu 107 is located in the upper right hand corner of the hyperlink 103. It should be appreciated that the submenu 107 may be located anywhere within the user interface 100 and displayed in any matter known in the art. The destinations 109 in the submenu 107 may be provided in a selectable format, wherein a user may individually select any number of destinations from the provided list 109.

The submenu 107 may include a plurality of destinations 109. The destinations 109 may include links to any number of applications or webpages. For example, if hyperlink 103 is related to transistors, the plurality of destinations 109 may include links to webpages related to different types of transistors. Furthermore, if the hyperlink 103 is related to media players, the plurality of destinations 109 may include links to various media players within a user's computer.

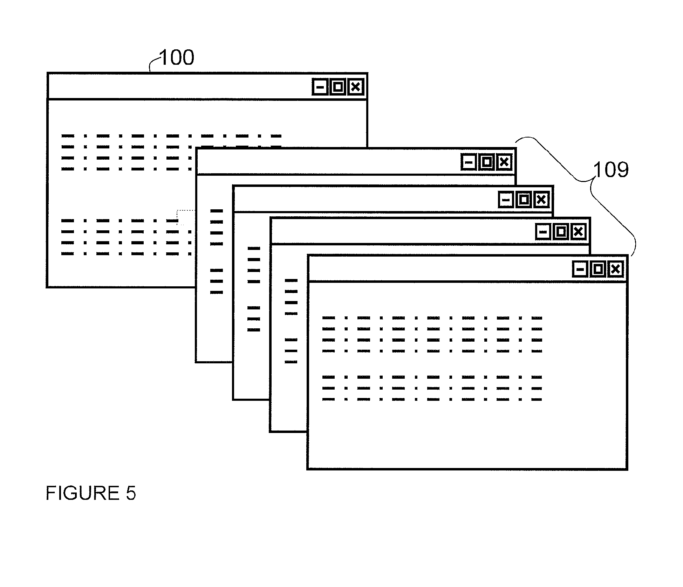

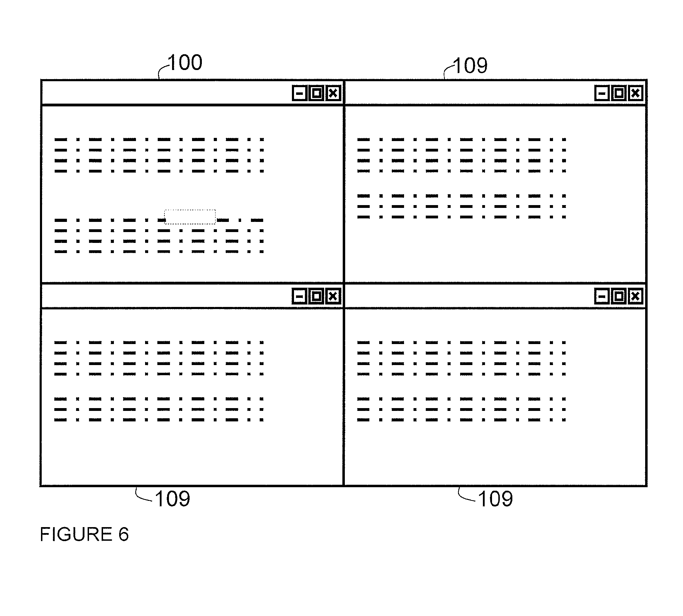

Hyperlink activation may also come in form of clicking, or double clicking, the hyperlink 103. Upon clicking the hyperlink, the navigation apparatus 200 may send instructions to the user interface 100 to launch the plurality of destinations 109 in a multiple window format, as shown in Figure 5. The example of Figure 5 illustrates the plurality of destinations 109 launched in a cascading configuration. It should be appreciated that the plurality of destinations may be launched in any matter known in the art. For example, the plurality of destinations 109 may be launched in a tiled configuration as illustrated in Figure 6.

It should be appreciated that plurality of destinations associated with each hyperlink may be preprogrammed by a web/application designer or programmer. Furthermore, it should be appreciated a user may have the ability of editing or programming a hyperlink. For example, a user may define a 'work' hyperlink configured to launch a plurality of destinations, or in the present example applications, which may include a calculator, word processor, spreadsheet, and/or a task list. As another example, a user may define a 'favorites' hyperlink configured to launch a plurality of destinations including webpages the user frequently visits. It should be appreciated that a hyperlink may be configured to launch any number of both applications and webpages. Thus, it should be appreciated that a 'favorites' hyperlink may also be configured to launch a task list as well as a webpage.

It should be appreciated that the above mentioned and described embodiments are only given as examples and should not be limiting. Other solutions, uses, objectives, and functions within the scope of the invention as claimed in the below described patent claims should be apparent for the person skilled in the art.

Furthermore, the various embodiments of the example embodiments described herein are described in the general context of method steps or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Software and web implementations of various embodiments may be accomplished with standard programming techniques with rule-based logic and other logic to accomplish various database searching steps or processes, correlation steps or processes, comparison steps or processes and decision steps or processes. It should be noted that the words "component" and "module," as used herein and in the following claims, is intended to encompass implementations using one or more lines of software code, and/or hardware implementations, and/or equipment for receiving manual inputs.

## Claims

1. A method of navigation comprising:
clicking on a hyperlink; and
opening a plurality of destinations as a result of said clicking.

2. The method of Claim 1, wherein the opening further comprises opening at least one destination which is an application.

3. The method of any of Claims 1-2, wherein the opening further comprises opening at least one destination which is a webpage.

4. The method of any of Claims 1-3, wherein the opening further comprises opening the plurality of destinations in cascading windows.

5. The method of any of Claims 1-4, wherein the opening further comprises opening the plurality of destinations in tiled windows.

6. The method of any of Claims 1-5, wherein the opening the plurality of destinations further comprises opening a submenu, the submenu including a list of the plurality of destinations in a selectable form.

7. The method of any of Claims 1-7, wherein the clicking further comprises clicking a user programmable hyperlink.

8. A navigation apparatus comprising:
a user interface configured to display a hyperlink; and
a processor configured to launch a plurality of destinations when said hyperlink is activated.

9. The apparatus of Claim 8, wherein the apparatus is configured to perform any one of Claims 1-7.

10. A computer readable medium encoded with computer readable program code, the program code comprising:
instructions operable to display a hyperlink in a user interface; and
instructions operable to launch a plurality of destinations when said hyperlink is activated.

11. The computer readable medium of Claim 10, wherein the programming code further comprises instructions to perform any one of claims 1-7.
